# EUROPEAN PATENT APPLICATION

(11) **EP 3 211 621 A1**
(43) Date of publication of application: **30.08.2017**
(21) Application number: 16382085.5
(22) Date of filing: 29.02.2016
(51) Int. Cl.: G08G 5/00, G01C 21/20, G06Q 10/04

(54) **METHOD AND ELECTRONIC DEVICE FOR OPTIMIZING A FLIGHT TRAJECTORY OF AN AIRCRAFT SUBJECT TO TIME OF ARRIVAL CONTROL CONSTRAINTS**

(71) Applicant: The Boeing Company, Chicago, IL 60606-2016 (US)
(72) Inventor: DE PRINS, JOHAN, 28042 MADRID (ES); FIGLAR, BASTIAN, 28042 MADRID (ES); RAVESTEIJN, COEN, 28042 MADRID (ES)
(74) Representative: Carvajal y Urquijo, Isabel

(57) **Abstract**

A method and electronic device for optimizing a flight trajectory of an aircraft subject to time of arrival control constraints. The electronic device comprises a communications unit (510) an optimization module (520) and an alert generation module (530). The communications unit (510) receives atmospheric conditions about an aircraft route, aircraft operational constraints and real-time aircraft state and performance. The optimization module (520) receives time of arrival control constraints for the aircraft route and flight trajectory optimization parameters at least including flight cruise altitude.

The optimization module (520) comprises a flight trajectory generator (522) that generates sets of values for flight trajectory optimization parameters, computes flight trajectories of the aircraft and selects, based on optimization criteria (e.g. fuel saving, speed control margin), one optimal flight cruise altitude with a computed flight trajectory complying with the time of arrival control constraints. The alert generation module (530) generates trajectory change alerts (532) including the selected optimal flight cruise altitude.

## Description

### FIELD

The present disclosure is related to a flight trajectory optimization procedure performed in-flight when an aircraft is operated under time of arrival control constraints in order to save fuel or increase the feasibility of compliance with the required time of arrival imposed to the airplane.

### BACKGROUND

Flight Management Systems (FMS) of modern aircraft allow the pilot to operate the aircraft under a time of arrival control (TOAC) constraint by setting a required time of arrival (RTA) at a specific waypoint along the route. Based on the RTA the FMS iterates on the planned speed schedule to make sure the waypoint is reached at the exact right time.

The planned speed schedule of a flight operation is usually determined such that the most economic speed to save fuel is flown based on the Cost-Index (CI) chosen by the airline. The CI describes a trade-off between cost of time and cost of fuel.

However, when a pilot is requested in flight to adhere to a TOAC constraint, the time constraint will determine a new speed schedule to be followed. Therefore, current flight trajectory optimization strategies look for a new aircraft airspeed to comply with the RTA, for example, obtaining the new speed schedule by iterating on the CI. In this case the economic optimum condition has become a secondary requirement and the total cost of the flight increases.

Moreover, a RTA constraint might not only take the speed schedule off the economic optimum, it might even push it towards the operational limits of the aircraft (minimum and maximum operational airspeeds). In this case, unpredictable wind and temperature variation along the RTA segment might prevent reaching the required time of arrival at the specified waypoint, since there might be no possibility left to further accelerate (if close to maximum operational speed) or to further decelerate (if close to minimum operational speed). It might also happen that a RTA constraint already cannot be reached at the current cruise altitude when initially set in the FMS due to minimum or maximum operational airspeeds. In both cases the pilot would receive a message "RTA UNABLE" to indicate that the RTA cannot be met.

The present flight trajectory optimization procedure solves the mentioned problems, complying with the time of arrival control constraints and, at the same time, minimizing the fuel consumption and ensuring RTA compliance.

### SUMMARY

The present disclosure refers to a computer-implemented method, an electronic device and a computer program product that advises the pilot on alternative flight cruise altitudes which are optimal with respect to fuel efficiency and/or RTA compliance when an aircraft is operated under TOAC constraints.

The method can be implemented as an application on a certified mobile device onboard the aircraft, such as the electronic flight bag (EFB), which can wirelessly receive data from the FMS (the FMS broadcasts predicted trajectory information). Based on the TOAC constraint (usually described by a RTA), real-time and/or forecasted atmospheric conditions (e.g. wind, temperature) as well as operational constraints, the mobile device advises when an opportunity occurs to save fuel and/or improve robustness of the TOAC by changing cruise altitude, either keeping the same airspeed or also changing the aircraft airspeed.

The mobile device can also advise the pilot on a change in the flight cruise altitude to increase the speed control margin (allowing slower minimum groundspeeds or faster maximum groundspeeds) and thus to increase the probability to comply with an imposed RTA constraint despite the unpredicted changes in the wind and temperature conditions. In this case the alternative cruise altitude would also increase the time control margin and the range of feasible times of arrival at a given waypoint.

In current systems whenever a pilot is requested to adhere to an RTA constraint and the speed schedule is changed, the economic optimum condition is abandoned and the total cost of the flight is increased. However, the present disclosure proposes a new flight trajectory optimization procedure which is able to optimize multiple trajectory parameters such as speed profile in combination with the vertical profile (aircraft altitude), providing the following benefits:
(1) Save fuel during RTA operations by flying at more economic airspeeds at a different altitude.
(2) Improve trajectory-based operations (TBO) and comply with negotiated 4D trajectory by:
   - Improving robustness of the time of arrival control (increased speed control margins). Increase the feasibility of complying with the imposed RTA constraint.
   - Increasing the range of feasible times of arrival at a given waypoint (increased time control margins), allowing the aircraft to arrive earlier or later without changing the route.

The method for optimizing a flight trajectory of an aircraft subject to time of arrival control constraints comprises the following steps:
- Receiving one or more time of arrival control constraints for an aircraft route.
- Receiving at least one of real-time and forecasted atmospheric conditions about the aircraft route.
- Obtaining data on aircraft operational constraints and real-time aircraft state and performance.
- Generating a plurality of set of values for one or more flight trajectory optimization parameters, said one or more flight trajectory optimization parameters at least including flight cruise altitude, so that all the generated set of values include flight cruise altitudes different from the current aircraft altitude.
- Computing, for the generated set of values of the one or more flight trajectory optimization parameters, flight trajectories of the aircraft using the received atmospheric conditions and the data on aircraft operational constraints and real-time aircraft state and performance.
- Selecting, based on one or more optimization criteria, at least one optimal flight cruise altitude with a computed flight trajectory complying with the time of arrival control constraints.
- Generating at least one trajectory change alert with the selected optimal flight cruise altitude.

The method may further comprise advising the aircraft pilot of the trajectory change alert; receiving from the aircraft pilot a new optimal flight cruise altitude, and communicating the new optimal flight cruise altitude to a flight management system of the aircraft. Alternatively, the method may comprise advising the aircraft pilot of the trajectory change alert and manually inputting a new optimal flight cruise altitude into a flight management system of the aircraft.

In an embodiment the flight trajectory optimization parameters also includes aircraft airspeed, such that the generated set of values include different pairs of flight cruise altitudes and aircraft airspeeds, and the trajectory change alert includes at least one pair of optimal flight cruise altitude and optimal aircraft airspeed having a computed flight trajectory in compliance with the time of arrival control constraints. The optimization criteria may comprise fuel saving, speed control margin and/or time control margin to comply with the time of arrival control constraints.

The data on real-time aircraft state and performance may include, for instance, real-time aircraft mass and flight performance data, real-time fuel consumption rate, fuel consumed, and fuel remaining data. The data on aircraft operational constraints and real-time aircraft state and performance is preferably retrieved from a flight management system of the aircraft. The atmospheric conditions preferably include the wind conditions and/or temperature conditions. The time of arrival control constraints may comprise a required time of arrival for at least one waypoint of the aircraft route.

In accordance with a further aspect of the present invention there is provided an electronic device for optimizing a flight trajectory of an aircraft subject to time of arrival control constraints. The electronic device comprises a communications unit, an optimization module and an alert generation module. The communications unit is configured to receive at least one of real-time and forecasted atmospheric conditions about an aircraft route, and data on aircraft operational constraints and real-time aircraft state and performance. The optimization module is configured to receive one or more time of arrival control constraints for the aircraft route and one or more flight trajectory optimization parameters at least including flight cruise altitude. The alert generation module is configured to generate one or more trajectory change alerts including the at least one selected optimal flight cruise altitude.

The optimization module comprises a flight trajectory generator configured to:
- Generate a plurality of set of values for one or more flight trajectory optimization parameters, so that all the generated set of values include flight cruise altitudes different from the current aircraft altitude.
- Compute, for the generated set of values of the one or more flight trajectory optimization parameters, flight trajectories of the aircraft using the received atmospheric conditions and the data on aircraft operational constraints and real-time aircraft state and performance.
- Select, based on one or more optimization criteria, at least one optimal flight cruise altitude with a computed flight trajectory complying with the time of arrival control constraints.

The electronic device may be implemented as an electronic flight bag or a mobile device including any of the following: a laptop, tablet computer, handheld electronic device.

The alert generation module of the electronic device is preferably configured to advise the aircraft pilot of the trajectory change alert through an output device (e.g. a display or a loudspeaker). The electronic device may be further configured to receive through an input device (e.g. a keyboard or a touchscreen) a new optimal flight cruise altitude set by the aircraft pilot in view of the trajectory change alert. The communications unit may be a wireless communications unit wirelessly coupled with a flight management system of the aircraft, the wireless communications unit being configured to communicate the new optimal flight cruise altitude to the flight management system.

In accordance with a yet further aspect of the present invention there is provided a computer program product for optimizing a flight trajectory of an aircraft subject to time of arrival control constraints,. The computer program product comprises computer code instructions that, when executed by a processor, causes the processor to perform the method. The computer program product may comprise at least one computer-readable storage medium having recorded thereon the computer code instructions.

The method is particularly interesting in the following cases:
- The application of an RTA constraint results in a very narrow speed control margin. This would mean that the imposed RTA constraint would cause the aircraft to fly at the lower/upper allowed speed boundary increasing the risk of non-compliance with the RTA constraint due to any unanticipated external disturbances. The method could in such a case provide the pilot with an alternative trajectory which would enlarge the control speed margin, significantly increasing the feasibility of complying with the RTA.
- The RTA application is unable. By exploring the altitude domain, a feasible trajectory that complies with the imposed RTA constraint may be found. Especially considering future Air Traffic Management (ATM) infrastructures this could make an important difference.
- The RTA constraint can take the aircraft far off its economic airspeed optimum. By exploring the altitude domain a new trajectory may be found which brings the aircraft closer to its optimal airspeed, thus helping to reduce fuel burn.

The proposed electronic device can be used as a certified mobile device to supplement the flight deck equipment to:
- Calculate the optimal cruise level to achieve the RTA with minimum fuel while maintaining a desired speed control margin.
- Monitor the changing flight conditions.
- Prompt pilots when, during the RTA operation, an opportunity to save additional fuel above a predefined threshold arises, by changing the flight level, and
- Prompt pilots when, during the RTA operation, an opportunity occurs to increase the speed control margin with minimal fuel penalization.
- Display the expected benefit in terms of fuel/cost on a screen to assist the pilot in taking his decision making to insert a new cruise altitude into the FMS based on the given advice.
- Provide higher certainty to arrive at the given waypoint at the right time.

The features, functions, and advantages that have been discussed can be achieved independently in various embodiments or may be combined in yet other embodiments further details of which can be seen with reference to the following description and drawings.

### BRIEF DESCRIPTION OF THE DRAWINGS

A series of drawings which aid in better understanding the disclosed embodiments and which are expressly related with an embodiment, presented as a non-limiting example thereof, are very briefly described below.
Figure 1 depicts the flight trajectory computation method currently implemented in the FMS according to the state of the art when the aircraft is operated under RTA constraints.
Figure 2 depicts a graph of the fuel consumption for constant groundspeed as a function of cruise altitude (and corresponding wind conditions).
Figure 3 represents speed control margins depending on cruise altitude.
Figure 4 depicts a graph to obtain speed control margins depending on cruise altitude and winds.
Figure 5 illustrates an electronic device for optimizing a flight trajectory of an aircraft subject to TOAC constraints.
Figure 6 depicts a logical diagram of the internal elements of the electronic device required for implementing the flight trajectory optimization.
Figure 7 shows an embodiment of the flight trajectory optimization method performed by an application running on a mobile device.

### DETAILED DESCRIPTION

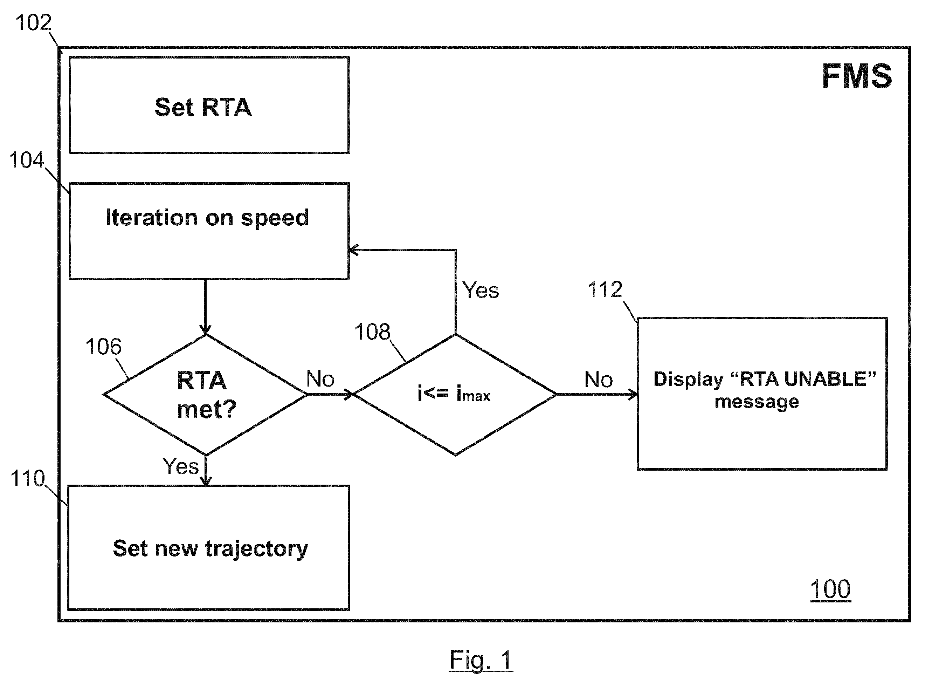

**Figure 1** illustrates the current method used in the state of the art to compute a new flight trajectory when an RTA is set. The pilot inputs a RTA 102 for a specific waypoint along the planned route into the flight management system (FMS) 100. Based on the time constraint the FMS computes 104 a new speed for the current trajectory and checks 106 if this new speed will result in compliance with the RTA constraint. The FMS looks for a new speed schedule to comply with the set RTA, considering the predicted wind at the current cruise altitude. If the new trajectory is not capable of complying with the RTA constraint, another iteration is performed up to a predefined number of maximum iterations (*iₘₐₓ*), according to the check performed in 108, or can break out earlier if minimum or maximum operating airspeed is already found to be insufficient. If a speed schedule complying with the RTA constraint is found, the FMS provides an updated predicted trajectory, displaying and setting a new trajectory 110 as a guidance reference for the autopilot. If the RTA constraint is not achievable, the pilot is advised that the RTA cannot be met and the FMS displays a "RTA UNABLE" message 112. This case would occur when the aircraft needs to go faster or slower than its operational speed limits.

The method of the present disclosure actively advises the pilot on potential control improvements and fuel saving opportunities occurring during time of arrival controlled cruise flight. For this purpose the method does not only consider changing the speed schedule but instead changing cruise altitude and making use of the corresponding wind conditions. Along with a change in cruise altitude, the method may also consider a change of the aircraft airspeed.

A change to a new, optimal flight cruise altitude leads to increased fuel efficiency and/or improved robustness of time of arrival control.

Fuel consumption refers to the amount of fuel burned along the route segment under time of arrival control. To comply with a RTA constraint, the aircraft needs to fly at a given groundspeed along a known distance to arrive at the RTA waypoint at the right time. Fuel consumption can be potentially decreased by climbing or descending to a new cruise altitude where the required groundspeed corresponds to a more efficient airspeed, since the wind conditions are very likely to be different at different altitudes, which directly affects the airspeed corresponding to the required groundspeed and thus the wind conditions need to be taken into account as well when finding the most fuel-efficient cruise altitude.

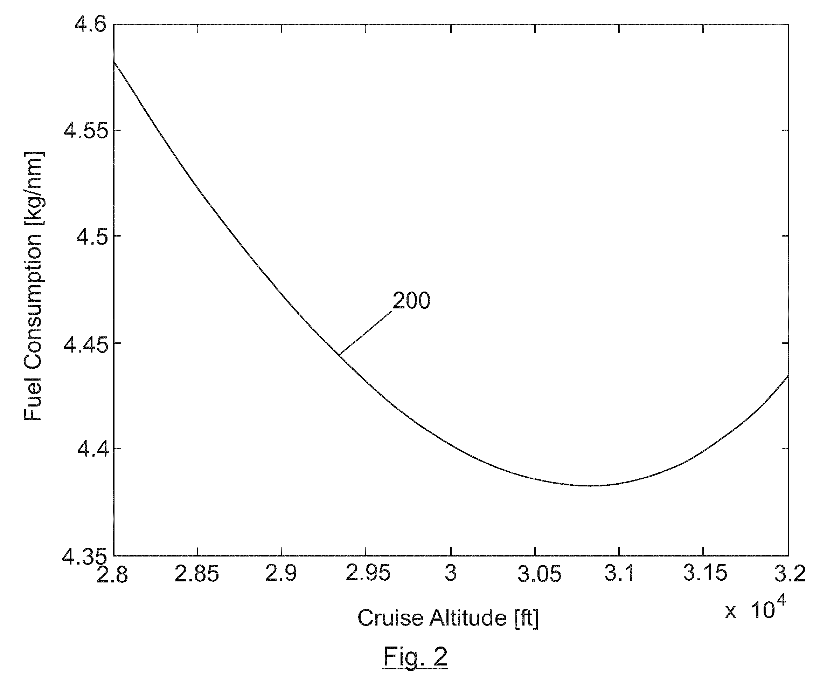

**Figure 2** shows, for a given example, how fuel consumption (in kg per nautical mile) for a specific groundspeed varies as a function of cruise altitude (between 28000 and 32000 ft). The curve 200 shown in Figure 2 is not only dependent on the pressure altitude but also on a wind profile, in this example a tailwind that linearly increases with altitude until reaching 31000 ft, where it starts decreasing.

Simultaneously, the new optimal flight cruise altitude can also provide, as a further advantage, robustness of time of arrival control, improving the speed control margin and time control margin.

The speed control margin refers to the margin the aircraft has available to increase or decrease its speed in order to correct unexpected deviations and comply with the established RTA constraint. The speed control margin is strongly coupled with the cruise altitude of the aircraft, which directly affects minimum and maximum flyable true airspeeds (TAS). Unknown external disturbances like wind speed and direction have a direct influence on the aircraft's groundspeed and therefore on the feasibility of complying with the RTA constraint. Extending the speed margin by changing the cruise altitude can directly increase the chances of arriving at the time constrained waypoint at the right time. According to the Minimum Aviation System Performance Standards ("Required Navigation Performance for Area Navigation", DO236C Change 1, section 2.2.1), deviations from the RTA should not be greater than 30s at the RTA waypoint in cruise for 95% of all operations.

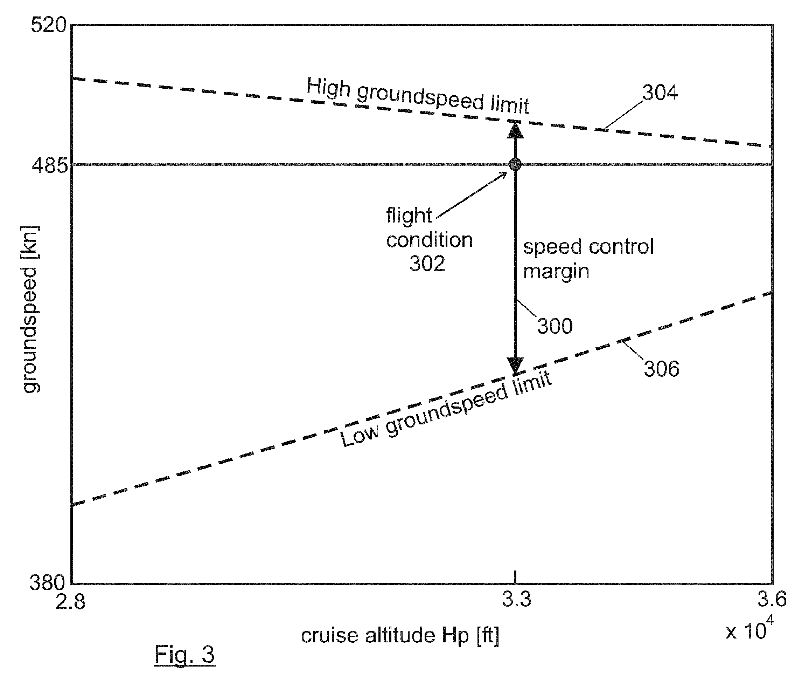

**Figure 3** depicts the speed control margin 300 for an exemplary flight condition 302 at cruise level of 33000 ft and a cruise speed equaling 485kn groundspeed. The upper and lower limits of possible groundspeeds are indicated by the black dotted lines (high groundspeed limit 304 and low groundspeed limit 306). These limits (304, 306) depend on the maximum operating speed and minimum maneuver speed of the aircraft, and on the wind conditions. The available range between the current groundspeed and the groundspeed limits describes the speed control margin 300. As can be observed, the speed control margin 300 typically increases with decreasing cruise altitude unless strong wind gradients occur (for example, near the jet stream).

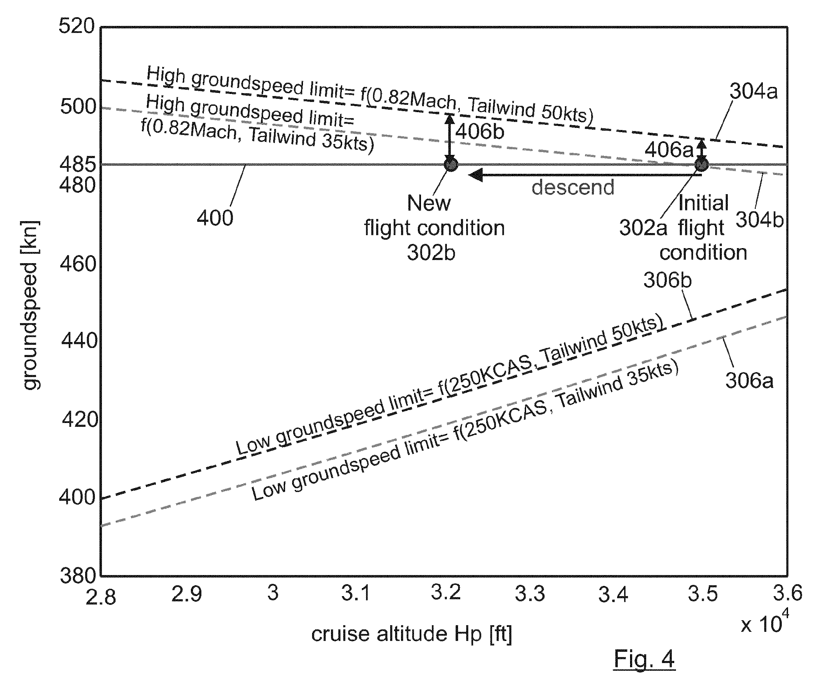

For complying with a RTA constraint the aircraft typically needs to fly at a given groundspeed along a known distance to arrive at the RTA waypoint at the right time. In the example of **Figure 4** it is assumed that the required groundspeed 400 is 485kn. Figure 4 represents speed control margins for constant groundspeed (485kn) and constant tailwind over different cruise altitudes. Depending on the cruise altitude and the wind profile the groundspeed refers to a specific airspeed.

The example of Figure 4 assumes two different tailwind profiles: a constant tailwind of 50kn and a constant tailwind of 35kn, in both cases not changing with altitude or location. Figure 4 shows, in dotted lines, the high and low groundspeed limits (304a, 306a) for constant tailwind of 50kn and the high and low groundspeed limits (304b, 306b) for constant tailwind of 35kn (for the high groundspeed limits a maximum aircraft airspeed of 0,82 Mach is considered). All groundspeeds within the dotted lines are flyable, but only the constant groundspeed 400 (485kn) result in the right arrival time. Assuming the aircraft is initially flying at 35000ft and 485kn groundspeed, initial flight condition 302a, the aircraft is operated very close to its maximum operating limit, high groundspeed limit 304a, with a narrow upper speed control margin 406a.

Should the tailwind decrease to 35kn, the groundspeed limits would shift and RTA compliance would become critical, since the initial flight condition 302a of required ground speed of 485kn at 35000 ft would lie outside the high groundspeed limit 304a, and therefore outside the flyable range. By changing to a new flight condition 302b (descending to 32000 ft and keeping the same ground speed of 485kn), the upper speed control margin 406b (i.e. the vertical distance between the new flight condition 302b and the high groundspeed limit 304a) would be larger and there would be more robustness to compensate for unpredictable variations of wind. The new flight condition 302b would be therefore more robust than the initial flight condition 302a. Such action may be penalized with an increase in fuel burn. Often a balance will have to be found between both objectives: optimizing fuel consumption and ensuring RTA compliance.

The method of the present disclosure also allows improving the time control margin, which refers to the time interval that defines the potential range of achievable times of arrival around the currently Estimated Time of Arrival (ETA) at the time constrained waypoint. The time control margin increases proportional to the speed control margin. The slower or faster the possibly achievable groundspeeds are, the later or earlier are the possibly achievable arrival times.

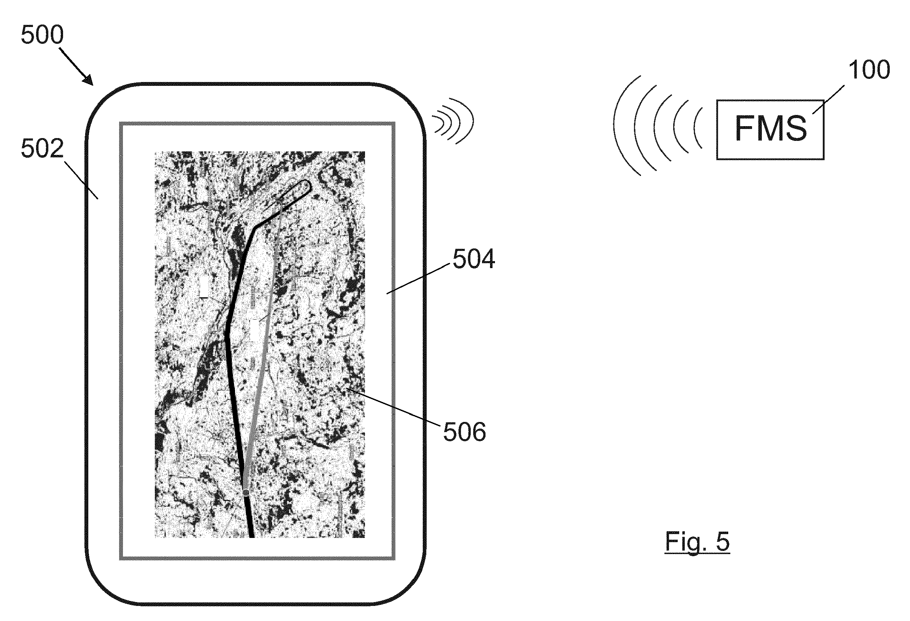

Figure 5 depicts an electronic device 500 for optimizing a flight trajectory of an aircraft subject to TOAC constraints. In the embodiment shown in Figure 5 the electronic device 500 is implemented as a mobile device (such as an electronic flight bag, a PDA, a smartphone or a tablet computer) wirelessly coupled with the FMS 100. In another embodiment the electronic device 500 could be installed on the instrument panel of the aircraft cockpit, directly linked to the FMS 100 of the airplane.

The electronic device 500 comprises a casing 502 and a screen 504 in which different information 506 is displayed, such as the current aircraft route and a new, optimal aircraft route proposed to the pilot. The user, normally the pilot, interacts with the electronic device 500 through input means, such as a keyboard and mouse, a pad or a touchscreen. In the example of Figure 5 the electronic device 500 comprises a wireless communication port to wirelessly communicate with the FMS 100 according to safety/encryption protocols, via Bluetooth, WiFi or any other wireless protocol.

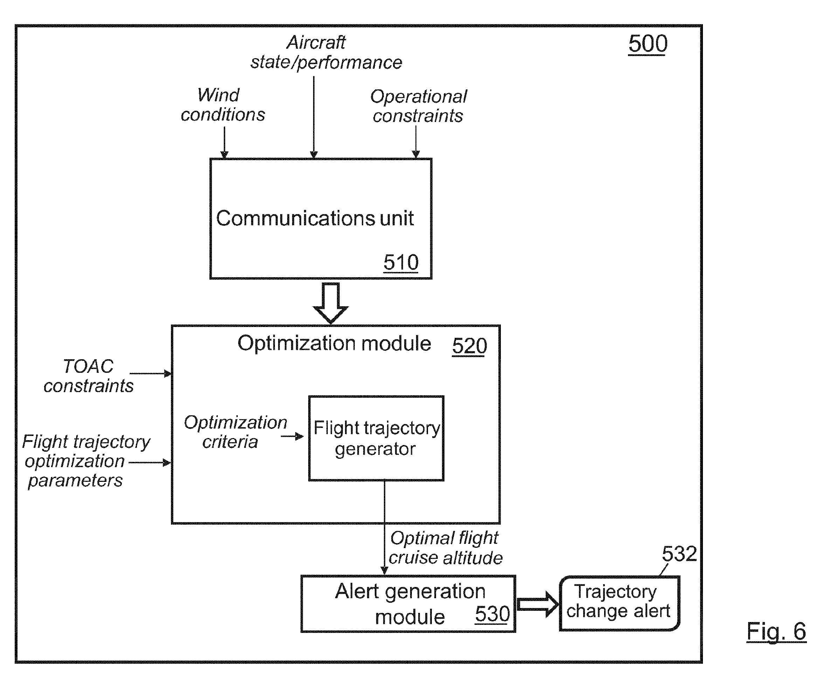

**Figure 6** represents a logical diagram of the components of the electronic device 500 in charge of implementing the optimization of a flight trajectory. The electronic device comprises a communications unit 510 for receiving atmospheric conditions (real-time and/or forecasted, and preferably including wind conditions) about an aircraft route. The communications unit 510 also receives data on aircraft operational constraints and real-time aircraft state and performance. According to the embodiment of Figure 5, the communications unit 510 is a wireless communications unit wirelessly coupled with the FMS 100 of the aircraft, through which the electronic device receives real-time aircraft data and the atmospheric conditions.

The electronic device 500 also comprises an optimization module 520 which can be implemented, for instance, in a processor and a memory unit. The optimization module 520 receives the data retrieved from the communications unit, the TOAC constraints and one or more flight trajectory optimization parameters. The optimization parameters at least include flight cruise altitude, and can also include aircraft airspeed. The TOAC constraints normally comprise a RTA for at least one waypoint of the aircraft route. The RTA can be set by the pilot using input means of the electronic device (for instance, the touchscreen). The optimization parameters can be pre-established and stored in an internal memory of the electronic device 500 or can be also selected by the pilot through the input means.

The optimization module 520 comprises a flight trajectory generator 522 that generates a plurality of set of values for one or more flight trajectory optimization parameters, so that all the generated set of values include flight cruise altitudes different from the current aircraft altitude. For instance, if the optimization parameters include flight cruise altitude and aircraft airspeed, the generated values are pairs of (altitude, speed) values in which the altitude is different from the current aircraft altitude. The flight trajectory generator 522 computes, for the generated set of values of the flight trajectory optimization parameters, flight trajectories of the aircraft taking into account the received atmospheric conditions and the data on aircraft operational constraints and real-time aircraft state and performance.

The flight trajectory generator 522 uses a cost function to select, based on one or more optimization criteria, one or more optimal flight cruise altitudes with a computed flight trajectory complying with the time of arrival control constraints. The optimization criteria may comprise fuel saving, speed control margin and/or time control margin.

The electronic device 500 also comprises an alert generation module 530 that generates a trajectory change alert 532 with the one or more selected optimal flight cruise altitudes. The alert generation module 530 may, for instance, display on the screen 504 of the electronic device 500 the trajectory change alert 532, pointing out the alternative optimal flight cruise altitude/s for which fuel saving or an improvement in robustness of the TOAC is achieved and the potential corresponding benefits (e.g. 250kg fuel savings expected for new altitude). The user of the electronic device 500 (e.g. the pilot) will then decide whether to accept or not any of the proposed flight trajectories with different cruise altitudes and, optionally, different aircraft airspeed. The pilot would then input the new altitude manually into the FMS. Alternatively, the electronic device wirelessly communicates the pilot's decision to the FMS 100 to adapt to the new flight trajectory. Therefore, a manual or an automatic adaptation of the flight trajectory in the FMS can be performed.

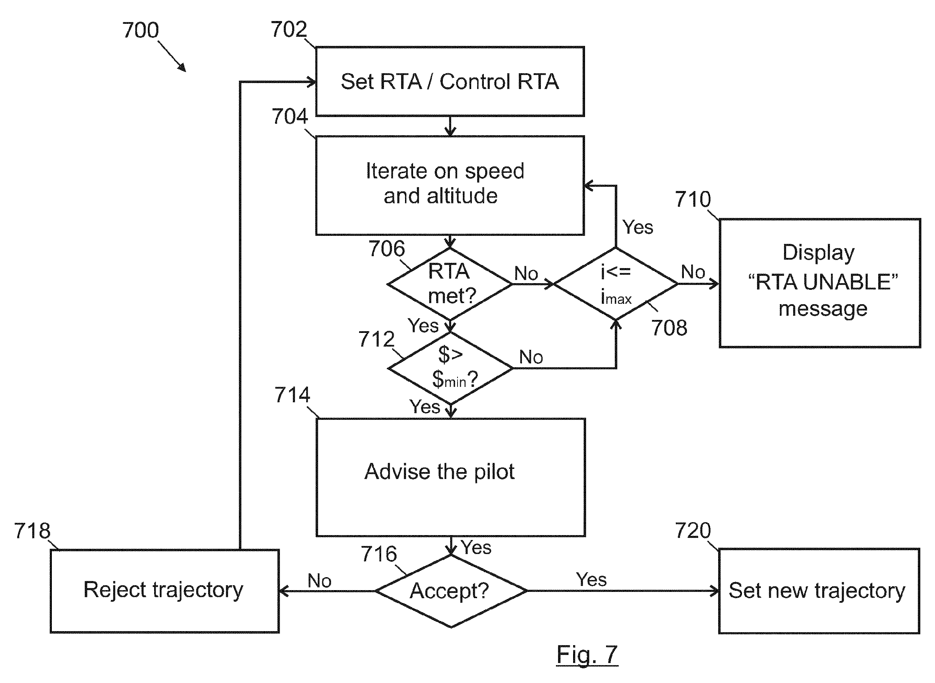

**Figure 7** shows a flow diagram of a flight trajectory optimization method 700 according to an embodiment. The optimization method takes into account the imposed speed limits, forecast wind profile (e.g. provided by an external weather forecast service), available operational constraints and the current aircraft state and performance. Most of these data can be broadcast by the FMS via the Onboard Network System (ONS) and received by the electronic device implementing the optimization method.

First, in 702 an RTA constraint is established (for instance, either entered by the pilot or already present in the FMS from previous selection). A computation will be performed exploring both the speed and altitude domain to find a new flight trajectory complying with the selected RTA time constraint. An iteration process is initiated in 704, iterating on different flight cruise altitudes and aircraft airspeeds, considering the predicted wind conditions at different altitudes.

In 706 the electronic device checks if the new cruise altitude and aircraft airspeed will result in compliance with the RTA constraint. If the RTA is not met, in 708 another iteration is performed up to a predefined number of maximum iterations, *iₘₐₓ*, looking for a new altitude and speed to comply with the set RTA. If the RTA is impossible to achieve under the predicted wind conditions for all considered cruise altitudes, the electronic device displays an "RTA UNABLE" message 710.

If the new flight trajectory complies with the RTA constraint, a check 712 is performed to see if the fuel saving achieved by the new trajectory or the increase in robustness is worth proposing the trajectory change to the pilot. The thresholds for fuel saving improvements and/or increased speed control margins or time control margins can be customized. If the improvement opportunity is above the set threshold for one of the cases, the electronic device will prompt a trajectory change alert message advising the pilot 714 with the new trajectory and the corresponding expected improvements. The application can advise the pilot on the optimal combination of cruise altitude and aircraft airspeed to minimize fuel consumption as well as more robust trajectories that increase the chance of arriving at the right time in the case of unpredictable wind variation.

The pilot then decides in 716 whether to accept or not any of the proposed flight trajectories. If the proposed trajectory is rejected 718, the electronic device will automatically check a new update in the RTA to initiate again the optimization process. If a proposed flight trajectory is accepted, the new trajectory is set in 720. The pilot updates the cruise altitude and airspeed in the FMS or, alternatively, the electronic device sends this data directly to the FMS, which recalculates the predicted trajectory.

In an alternative embodiment, the trajectory change alert message could be limited to only a cruise level change advice, such that the FMS only receives a new cruise altitude (if accepted by the pilot) and searches for the proper speed schedule to comply with the RTA constraint.

One of the significant benefits of the proposed invention is the capability to advise the pilots if any saving opportunity may arise during an ongoing RTA operation as atmospheric conditions change. For this purpose the electronic device will continuously iterate on the RTA constraint, both in the speed and altitude domain, taking into account current wind profiles, operational constraints and real-time aircraft status to determine if a more efficient trajectory could be established. In that case the pilots are duly notified, and decide whether to follow or not the recommended flight trajectory. This way, the electronic device prevents that the pilots are unaware of potential saving opportunities during RTA operations.

## Claims

1. A method for optimizing a flight trajectory of an aircraft subject to time of arrival control constraints, the method comprising:
receiving one or more time of arrival control constraints for an aircraft route;
receiving at least one of real-time and forecasted atmospheric conditions about the aircraft route;
obtaining data on aircraft operational constraints and real-time aircraft state and performance;
generating a plurality of set of values for one or more flight trajectory optimization parameters, said one or more flight trajectory optimization parameters at least including flight cruise altitude, so that all the generated set of values include flight cruise altitudes different from the current aircraft altitude;
computing, for the generated set of values of the one or more flight trajectory optimization parameters, flight trajectories of the aircraft using the received atmospheric conditions and the data on aircraft operational constraints and real-time aircraft state and performance;
selecting, based on one or more optimization criteria, at least one optimal flight cruise altitude with a computed flight trajectory complying with the time of arrival control constraints;
generating at least one trajectory change alert with the selected optimal flight cruise altitude.

2. The method of claim 1, further comprising:
advising the aircraft pilot of the trajectory change alert;
receiving from the aircraft pilot a new optimal flight cruise altitude, and
communicating the new optimal flight cruise altitude to a flight management system (100) of the aircraft.

3. The method of claim 1, further comprising:
advising the aircraft pilot of the trajectory change alert;
manually inputting a new optimal flight cruise altitude into a flight management system (100) of the aircraft.

4. The method of any preceding claim, wherein the one or more flight trajectory optimization parameters also includes aircraft airspeed, such that the generated set of values include different pairs of flight cruise altitudes and aircraft airspeeds, and the trajectory change alert includes at least one pair of optimal flight cruise altitude and optimal aircraft airspeed having a computed flight trajectory in compliance with the time of arrival control constraints.

5. The method of any preceding claim, wherein the one or more optimization criteria comprises fuel saving.

6. The method of any preceding claim, wherein the one or more optimization criteria comprises speed control margin.

7. The method of any preceding claim, wherein the one or more optimization criteria comprises time control margin to comply with the time of arrival control constraints.

8. The method of any preceding claim, wherein the data on real-time aircraft state and performance includes:
- real-time aircraft mass and flight performance data,
- real-time fuel consumption rate, fuel consumed, and fuel remaining data.

9. The method of any preceding claim, wherein the data on aircraft operational constraints and real-time aircraft state and performance is retrieved from a flight management system (100) of the aircraft.

10. The method of any preceding claim, wherein the atmospheric conditions include the wind conditions and/or temperature conditions.

11. The method of any preceding claim, wherein the one or more time of arrival control constraints comprise a required time of arrival for at least one waypoint of the aircraft route.

12. An electronic device for optimizing a flight trajectory of an aircraft subject to time of arrival control constraints, the electronic device (500) comprising:
a communications unit (510) for receiving
at least one of real-time and forecasted atmospheric conditions about an aircraft route, and
data on aircraft operational constraints and real-time aircraft state and performance;
an optimization module (520) configured to receive one or more time of arrival control constraints for the aircraft route and one or more flight trajectory optimization parameters at least including flight cruise altitude, the optimization module (520) comprising a flight trajectory generator (522) configured to:
generate a plurality of set of values for one or more flight trajectory optimization parameters, so that all the generated set of values include flight cruise altitudes different from the current aircraft altitude;
compute, for the generated set of values of the one or more flight trajectory optimization parameters, flight trajectories of the aircraft using the received atmospheric conditions and the data on aircraft operational constraints and real-time aircraft state and performance;
select, based on one or more optimization criteria, at least one optimal flight cruise altitude with a computed flight trajectory complying with the time of arrival control constraints; and
an alert generation module (530) configured to generate one or more trajectory change alerts (532) including the at least one selected optimal flight cruise altitude.

13. The electronic device of claim 12, the electronic device (500) being implemented as an electronic flight bag or a mobile device including any of the following: a laptop, tablet computer, handheld electronic device.

14. The electronic device of claim 13, wherein the alert generation module (530) is configured to advise the aircraft pilot of the trajectory change alert through an output device.

15. The electronic device of claim 14, wherein the electronic device (500) is configured to receive through an input device a new optimal flight cruise altitude set by the aircraft pilot in view of the trajectory change alert, and
wherein the communications unit (510) is a wireless communications unit wirelessly coupled with a flight management system (100) of the aircraft, the wireless communications unit being configured to communicate the new optimal flight cruise altitude to the flight management system (100).

16. A computer program product for optimizing a flight trajectory of an aircraft subject to time of arrival control constraints, comprising computer code instructions that, when executed by a processor, causes the processor to perform the method of any of claims 1 to 10.

17. The computer program product of claim 16, comprising at least one computer-readable storage medium having recorded thereon the computer code instructions.
